# EUROPÄISCHE PATENTSCHRIFT

(11) **EP 2 127 924 B1**
(45) Veröffentlichungstag und Bekanntmachung des Hinweises auf die Patenterteilung: **05.01.2011**
(21) Anmeldenummer: 09012040.3
(22) Anmeldetag: 28.06.2006
(51) Int. Cl.: B60H 1/22

(54) **Elektrische Heizvorrichtung**
Electrical heating device
Dispositif de chauffage électrique

(43) Veröffentlichungstag der Anmeldung: 02.12.2009
(62) Teilanmeldung aus: 06013287.5
(73) Patentinhaber: Eberspächer catem GmbH & Co. KG, 76863 Herxheim bei Landau (DE)
(72) Erfinder: Niederer, Michael, 76889 Kapellen Drusweiler (DE); Walz, Kurt, 76767 Hagenbach (DE); Bohlender, Franz, 76870 Kandel (DE)
(74) Vertreter: Grünecker, Kinkeldey, Stockmair & Schwanhäusser Anwaltssozietät

(56) Entgegenhaltungen:
- EP-A- 0 899 985
- FR-A- 2 827 113
- US-A- 6 084 218

## Beschreibung

Die vorliegende Erfindung betrifft eine elektrische Heizvorrichtung zur Erwärmung eines strömenden Mediums, wobei im Sinne der vorliegenden Erfindung als Medium insbesondere ein flüssiges Medium zu verstehen ist. Die vorliegende Erfindung betrifft insbesondere eine elektrische Heizvorrichtung für ein Kraftfahrzeug, hier speziell für ein Kraftfahrzeug, welches mit einem Antrieb betrieben wird, der kaum oder keine erhebliche Prozesswärme abgibt. Hierzu gehören insbesondere Hybrid-Antriebe. Dementsprechend soll mit der vorliegenden Erfindung eine Heizvorrichtung angegeben werden, die sich insbesondere dazu eignet, die für die ablaufenden Prozesse in einzelnen Anlagenteile eines Kraftfahrzeuges erforderliche oder zumindest diese fördernde Wärme zu erzeugen. Die erfindungsgemäße Heizvorrichtung soll insbesondere geeignet sein, eine größere Menge von Wärme in kürzester Zeit zu erzeugen, um diese innerhalb kürzester Zeit an die entsprechenden Anlagenteile innerhalb des Kraftfahrzeuges abzugeben. Dabei soll ein Augenmerk der vorliegenden Erfindung darauf gerichtet sein, eine Überhitzung der elektrischen Heizvorrichtung aufgrund von Steuerungsfehtern zu vermeiden.

Aus der DE 407 558 C ist eine elektrische Heizvorrichtung zur Erwärmung von Wasser bekannt, die miteinander verbundene und identisch ausgebildete Flachkästen umfasst, die zwischen sich U-förmige Ausnehmungen ausbilden. Das zu erwärmende Wasser durchströmt mäandrierend die Heizvorrichtung, so dass von in die U-förmige Ausnehmungen eingebrachten elektrischen Heizelementen erzeugte Wärme an das Wasser übertragen werden und dieses erwärmt werden kann.

Aus der EP 0 899 985 A1 ist ein Wasserheizer gemäß oberbegriff des Anspruchs 1 bekannt, bei dem in Strangpressprofilen ausgeformte Bohrungen mit einer Ein- und einer Auslassöffnung für das zu erwärmende Wasser kommunizieren. Die vorbekannte elektrische Heizvorrichtung hat mehrere geschichtete Strangpressprofile, die unter Zwischenlage von PTC-Heizelementen gegeneinander geklemmt sind.

Aus der FR 2 827113 A ist eine elektrische Heizvorrichtung mit PTC-Heizlementen bekannt, die in einer durch das zu erwärmende Medium angeströmten Kammer mit einer Ein- und einer Auslassöffnung vorgesehen sind, welche durch eine Trennwand von einer Kammer getrennt sind, in der eine mit elektrischen Bauelementen bestückte Leiterplatte vorgesehen ist. Diese Leiterplatte weist Ausnehmungen auf, die von Verlängerungsabschnitten durchsetzt sind, die von Kontaktblechen der PTC-Heizlemente gebildet sind und elektrisch leitend an den PTC-Heizelementen anliegen.

Der vorliegenden Erfindung liegt das Probl zugrunde, eine verbesserte elektrische Heizvorrichtung mit PTC Heizelementen anzugeben, die eine einfache Kontaktierung der PTC-Heizelemente ermöglicht.

Zur Lösung dieses Problems wird mit der vorliegenden Erfindung eine elektrische Heizvorrichtung mit den Merkmalen von Anspruch 1 angegeben.

Bevorzugte Weiterbildungen der erfindungsgemäßen Heizvorrichtung sind in den Unteransprüchen angegeben.

Die erfindungsgemäße elektrische Heizvorrichtung eignet sich insbesondere als Heizvorrichtung für einen Hybrid-Antrieb eines Fahrzeuges. Darüber hinaus eignet sich die erfindungsgemäße Heizvorrichtung auch als Rekuperator zur Ableitung überschüssiger Energie, welche durch Generatorbetrieb eines Elektromotors beim regenerativen Bremsvorgang entsteht. Eine solche überschüssige elektrische Energie wird zunächst zum Auffüllen eines an dem Fahrzeug vorgesehenen elektrischen Speichers (Batterie) genutzt. Wenn aber auch dieser Speicher vollständig geladen ist, muss elektrische Energie abgeleitet werden und hierzu eignet sich insbesondere die erfindungsgemäße elektrische Heizvorrichtung, durch die elektrische Energie in thermische Energie umgeformt wird, die beispielsweise über Wärmetauscher an die Umgebung abgegeben oder für die Innenraumheizung genutzt werden kann.

Die vorliegende Erfindung wird nachfolgend anhand eines Ausführungsbeispiels in Verbindung mit der Zeichnung näher erläutert. In dieser zeigen:
- Figur 1: eine perspektivische Draufsicht auf einen Teil des Ausführungsbeispiels bei geöffneter Abdeckung;
- Figur 2: eine perspektivische Draufsicht auf den unteren Teil des Gehäuses bei abgenommenem Gehäuseboden;
- Figur 3: eine Längsschnittansicht durch das in Figur 1 gezeigte Ausführungsbei- spiel;
- Figur 4: eine perspektivische Draufsicht auf ein Ausführungsbeispiel eines elektri- schen Heizelementes, welches in der Heizvorrichtung nach den Figuren 1 bis 3 Verwendung findet;
- Figur 5: zwei auf das in Figur 1 gezeigte Teil aufzusetzende Platten;

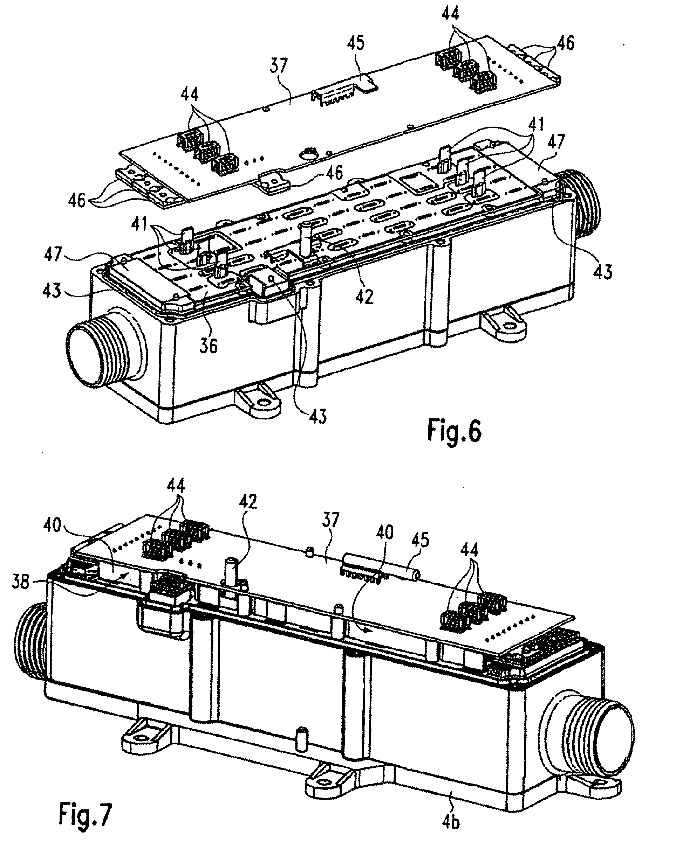

- Figur 6: das Ausführungsbeispiel nach Figur 1 bei auf das Teil aufgesetzten Plat- ten gemäß Figur 5;
- Figur 7: das Ausführungsbeispiel nach Figur 1 bei aufgesetzter zweiter Leiterplat- te; und

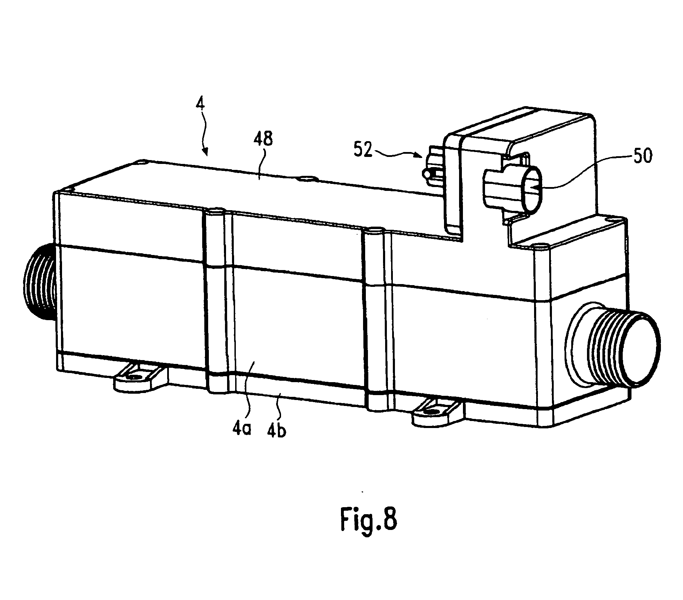

- Figur 8: das in den vorherigen Figuren gezeigte Ausführungsbeispiel bei aufge- setzter Abdeckung.

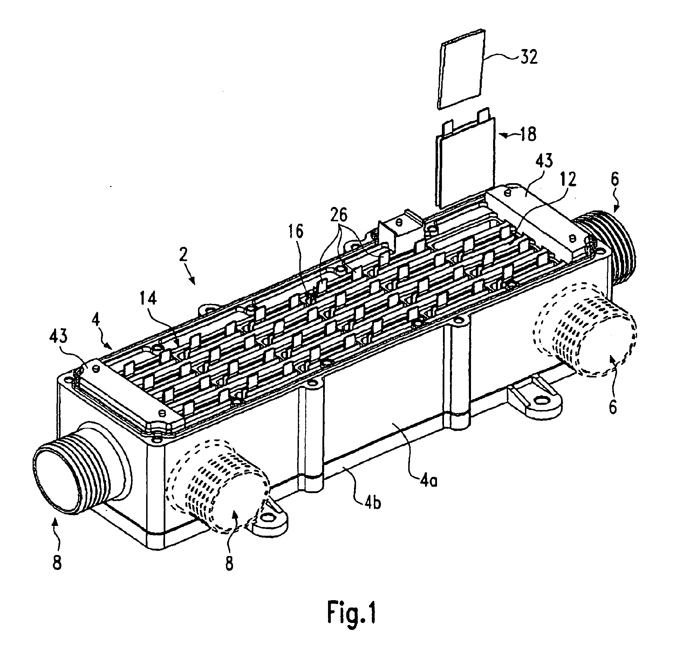

Die Figur 1 zeigt das Ausführungsbeispiel einer Heizvorrichtung 2 mit einem länglichen Gehäuse 4 bestehend aus einem im wesentlichen zylindrischen Gehäuserahmen 4 und einem daran angeschraubten Gehäuseboden 4b. An einer Seitenfläche des Gehäuserahmens 4a sind an gegenüberliegenden Enden dieses länglichen Gehäuserahmens 4a Stutzen angeordnet, welche Ein- und Auslassöffnungen 6, 8 umgeben und an welche über Schlauchklemmen oder dergleichen Anschlussleitungen anschließbar sind, die zu einer im wesentlichen von dem Gehäuserahmen 4a umgebenen Zirkulationskammer 10 führen. In Figur 1 sind die Stutzen an den stirnseitigen Enden des Gehäuserahmens 4a angeordnet. Eine andere Anordnung der Stutzen an den gegenüberliegenden Enden des länglichen Gehäuserahmens 4a ist mit gestrichelten Linien angedeutet. Diese Zirkulationskammer 10 wird durch eine Trennwand 12 von einer darüberliegenden Heizkammer 14 getrennt, und zwar derart, dass das in der Zirkulationskammer 10 enthaltene Fluid (beispielsweise Wasser) nicht in die Heizkammer 14 gelangen kann. Die Trennwand 12 kann beispielsweise einstückig an dem Gehäuserahmen 4a angeformt sein.

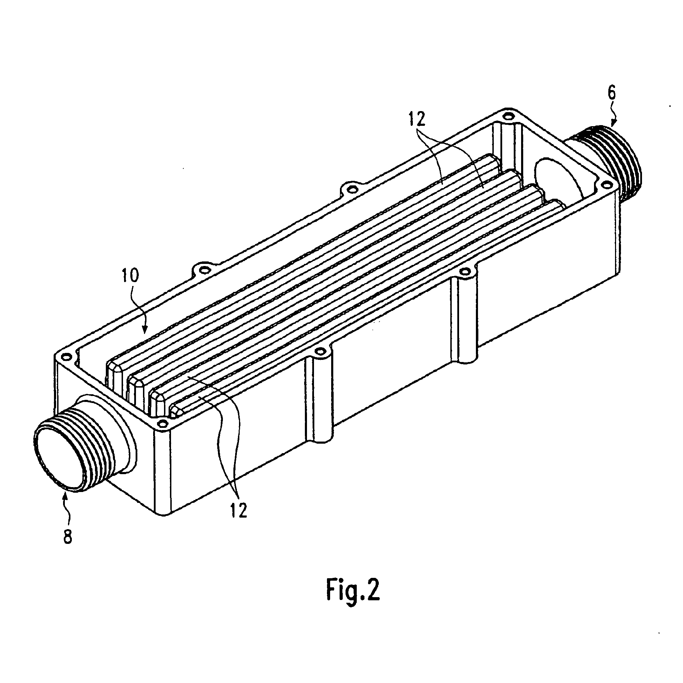

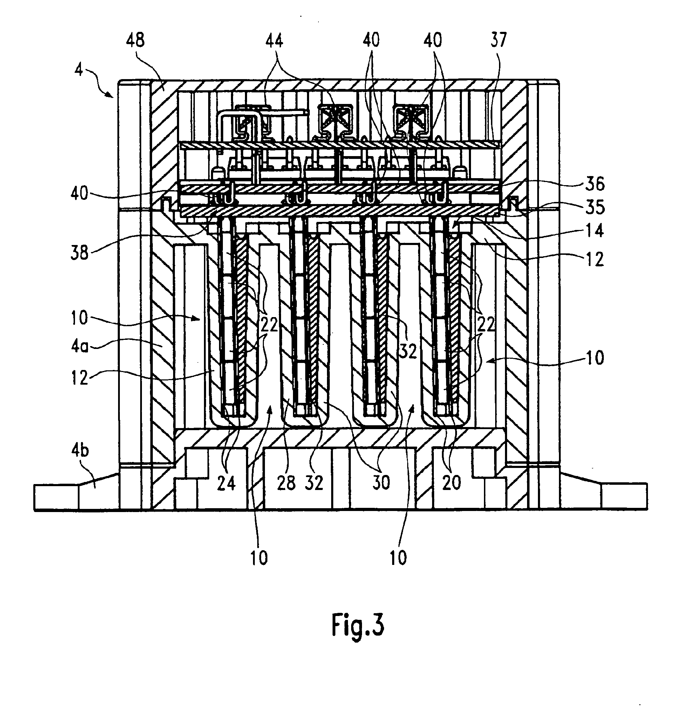

Wie Figur 3 verdeutlicht, bildet die Trennwand 12 mehrere in Breitenrichtung hintereinander angeordnete Ausnehmungen 16 aus, die sich im wesentlichen über die gesamte Länge des Gehäuses 4 erstrecken (vgl. Figur 2). Die Trennwand 12 weist dementsprechend eine mäandrierende Form mit tief in die Zirkulationskammer 10 hineinragenden Ausnehmungen 16 auf, die gegenüber der Zirkulationskammer 10 vollkommen abgedichtet und zu der Heizkammer 14 offen sind. Da diese Ausnehmungen 16 vorzugsweise aus einem gut leitenden Material, insbesondere Metall und hier speziell Aluminium gefertigt sind, bietet es sich an, die Trennwand 12 beispielsweise als separates Bauteil und mittels Umformen herzustellen. Die Ausnehmungen 16 haben einen U-förmigen Querschnitt und verlaufen in Längsrichtung des Gehäuses 4 parallel zueinander.

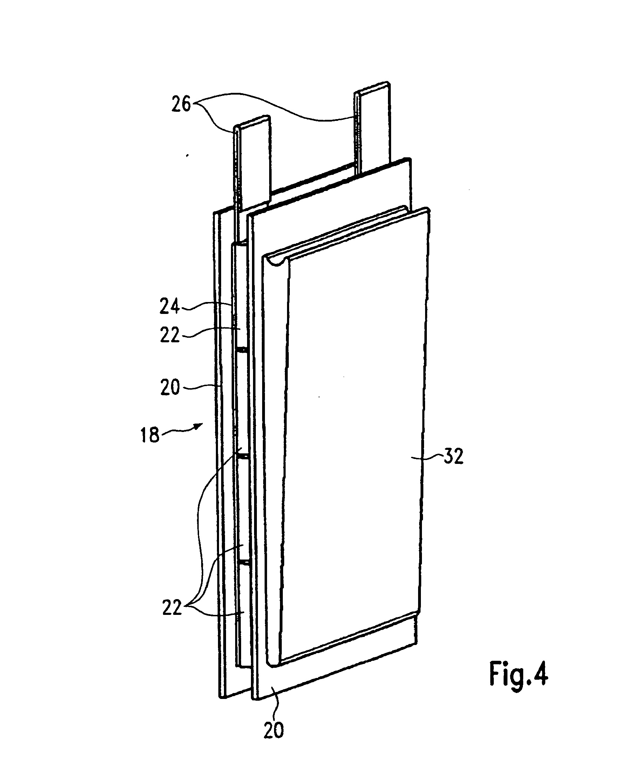

In jeder der Ausnehmungen 16 befinden sich Heizelemente 18, welche den in Figur 4 gezeigten Aufbau aufweisen. Die Außenseite der jeweiligen Heizelemente 18 wird durch keramische Platten 20 gebildet. Zwischen diesen keramischen Platten sind vorliegend mehrere PTC-Heizelemente 22 angeordnet. Wiederum zwischen diesen PTC-Heizelementen 22 und den keramischen Platten 20 befinden sich Kontaktbleche 24 aus einem elektrisch leitenden Material. Einstückig an diesen Kontaktblechen 24 angeformt sind Verlängerungsabschnitte 26. Die Verlängerungsabschnitte 26 der einander gegenüberliegenden Kontaktbleche befinden sich an diagonal gegenüberliegenden Seiten. Die Verlängerungsabschnitte sind dementsprechend nicht nur aufgrund der Dicke der PTC-Heizelemente 22 voneinander beabstandet, sondern darüber hinaus auch im wesentlichen durch die Breite der Heizelemente 18 voneinander entfernt. Zur Verstärkung sind die Verlängerungsabschnitte 26 durch einmaliges Falten des Materials der Kontaktbleche 24 in der Dicke aufgedoppelt.

Die keramischen Platten 20, die PTC-Heizelemente 22 und die Kontaktbleche 24 sind vorzugsweise durch Kleben zu einer Einheit verbunden. Wie Figur 4 verdeutlicht, überragen die keramischen Platten 20 die PTC-Heizelemente 22 und die Kontaktbleche 24 allseitig zur Ausbildung eines umlaufenden Randes. Die in die Ausnehmungen 16 eingebrachten elektrischen Heizelemente 18 liegen mit einer der keramischen Platten 20 an einem Schenkel 28 der U-förmigen Ausnehmung 16 an. Zwischen dem gegenüberliegenden Schenkel 30 und dem Heizelement 18 befindet sich ein Druckelement 32, welches unter Spannung in die Ausnehmung 16 eingebracht und einem einzelnen elektrischen Heizelement 18 zugeordnet ist. Durch das jeweilige Druckelement 32 wird ein einziges Heizelement 18 in der Ausnehmung 16 gehalten und gegen die gegenüberliegenden Schenkel 28, 30 der Ausnehmung 16 verspannt. Dementsprechend liegt das Heizelement 18 mit guter Wärmeleitung gegen die gegenüberliegenden Schenkel 28, 30 an. Ferner stehen die Heizelemente 18 auf einem die Schenkel 28, 30 verbindenden Steg 34 der Ausnehmung 16 auf und sind dementsprechend höhenmäßig festgelegt. Das elektrische Heizelement 18 liegt mit den unteren Stirnseiten der keramischen Platten 20 an dem Steg 34 an, so dass die elektrisch leitenden Teile des Heizelementes 18 von dem metallischen Steg 34 beabstandet und somit isoliert sind. Die Tiefe der Ausnehmungen 16 ist ferner so gewählt, dass das Heizelement 18 zumindest über die Höhe der übereinander gestapelten PTC-Heizelemente 22 von dem Medium in der Zirkulationskammer 16 umströmt wird, d.h. das gesamte elektrische Heizelement 18 in der Ausnehmung 16 aufgenommen ist.

Die U-förmigen Ausnehmungen 16 haben einen leicht konisch zulaufenden Querschnitt. Das Druckelement 32 ist ebenfalls keilförmig ausgebildet, und zwar mit einer den konischen Verlauf der Ausnehmung 16 entsprechenden Steigung. Die Dicke des Druckelementes 32 und des elektrischen Heizelementes 18 entspricht im wesentlichen Breite der jeweiligen Ausnehmung 16.

Das Druckelement 32 besteht aus einem gut wärmeleitenden Material, beispielsweise Aluminium und die Dicke der keramischen Platten 20 ist so gewählt, dass die Wärmeleitung von den Heizelementen 18 durch das Material der Schenkel 28, 30 kaum beeinträchtigt wird. Aufgrund der hohen Verpressung der Heizelemente 18 zusammen mit dem Druckelement 32 ergibt sich eine nahezu symmetrische Wärmeabfuhr zu beiden Seiten der länglichen Ausnehmungen 16.

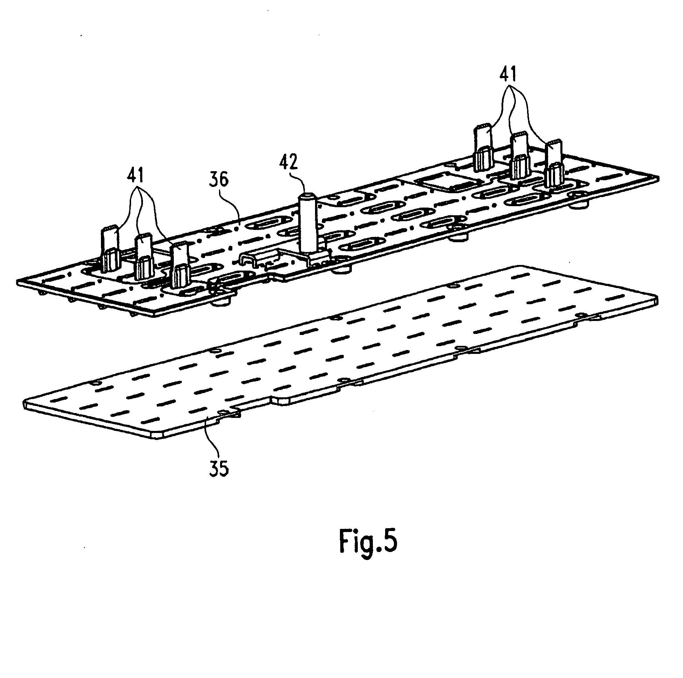

Wie Figur 1 zu entnehmen ist, überragen die Verlängerungsabschnitte 34 die Oberseite der Trennwand 12 und liegen in der Heizkammer 14 frei. Auf diese Verlängerungsabschnitte 26 werden die in Figur 5 gezeigten Platten, nämlich eine Isolierplatte 35 und eine erste Leiterplatte 36 aufgeschoben. Die Isolierplatte 35 ist aus einem elektrisch isolierenden Material und weist ein der Größe und Lage der Verlängerungsabschnitte entsprechendes Lochmuster auf. Die in der Isolierplatte 35 ausgesparten Öffnungen für die Verlängerungsabschnitte 26 dienen der Führung der Verlängerungsabschnitte 26 und der sicheren Isolierung. Ferner weist die Isolierplatte 35 Aussparungen und Aufnahmen für von der ersten Leiterplatte 36 vorstehende Teile der ersten Leiterplatte 36 auf.

Die erste Leiterplatte 36 weist zu jeder Ausnehmung 16 zwei Kontaktaufnahmen 38 auf, die durch gebogene und unter Vorspannung die Verlängerungsabschnitte 26 aufnehmende Verlängerungsabschnittaufnahmen 40 gebildet sind (vgl. insbesondere Figur 3). Bei einer alternativen, hier nicht dargestellten Ausgestaltung können die Kontaktaufnahmen auch durch zwei gegenüberliegende Kontaktbleche gebildet sein, deren lichter Abstand so gewählt ist, dass die in den Kontaktaufnahmen aufgenommen Verlängerungsabschnitte unter Vorspannung gegen die Kontaktbleche anliegen. In einem solchen Fall sind mehrere Verlängerungsabschnitte von hintereinander angeordneten elektrischen Elementen über die Kontaktbleche in Reihe geschaltet. Bei dem gezeigten Ausführungsbeispiel erfolgt die elektrische Gruppierung von Heizelementen 18 durch Leiterbahnen der ersten Leiterplatte 36, die dementsprechend auch als Verteilerplatte bezeichnet wird.

Die erste Leiterplatte 36 wird auf der den Heizelementen 18 abgewandten Oberseite durch sechs Kontaktzungenelemente 41 sowie ein zylindrisches Anschlusselement 42 für die Plusphase überragt, die jeweils an der ersten Leiterplatte 36 angeordnet sind. Die erste Leiterplatte 36 liegt in etwa auf Höhe von Auflageflächen 43, die an den stirnseitigen Enden des Gehäuserahmens 4a vorgesehen sind. Die erste Leiterplatte 36 weist keine elektronischen Bauteile auf, sondern lediglich Leiterbahnen und die vorerwähnten Anschlusselemente 41, 42 und so dient die erste Leiterplatte 36 als Verteilerplatte lediglich der Zusammenfassung von einzelnen elektrischen Heizelementen 18 zu Gruppen im Hinblick auf eine Steuerung sämtlicher elektrischer Heizelemente einer Gruppe.

Die zweite Leiterplatte 37 hat sechs den Kontaktzungenelementen 41 zugeordnete Steckkontaktaufnahmen 44, die an der Oberseite der zweiten Leiterplatte 37 angeordnet sind. Ferner ist auf der Oberseite der zweiten Leiterplatte 37 ein Minus-Anschlusselement 45 vorgesehen. An ihrer Unterseite trägt die zweite Leiterplatte 37 elektrische Schaltelemente, insbesondere Halbleiterschalter 46, welche die zweite Leiterplatte 37 stirnseitig bzw. endseitig überragen und unter Zwischenlage einer Isolierschicht 47 gegen die Anlageflächen 43 anliegen, so dass durch den so geschaffenen unmittelbaren Kontakt die Möglichkeit besteht, von den Halbleiterschaltern 46 erzeugte Verlustwärme durch Leitung in das Gehäuse 4 abzuleiten, nachdem die zweite Leiterplatte 37 mit Abstand zu der ersten Leiterplatte 36 montiert worden ist. Die Kontaktzungenelemente 41 greifen dann in die entsprechenden Steckkontaktaufnahmen 44 ein. Das Plus-Anschlusselement 42 durchragt eine an der zweiten Leiterplatte 37 ausgesparte Ausnehmung und überragt die zweite Leiterplatte 37. An den beiden Anschlusselementen 42 und 45 erfolgt die nachfolgende Kontaktierung beim Aufsetzen einer Gehäuseabdeckung 48. Diese weist an ihrer Oberseite einen Stromanschluss 50 und einen Signalanschluss 52 auf und dient der Abdichtung der Heizkammer 14 gegenüber der Umgebung.

Das in der Zeichnung gezeigte Ausführungsbeispiel hat 24 Heizelemente mit jeweils vier PTC-Heizelementen und es hat sich überraschenderweise gezeigt, dass diese elektrische Heizvorrichtung eine thermische Wärmeleistung von bis über 10 kW abgeben kann. Mit dieser Leistung lässt sich die durch den Generatorbetrieb entstehende und nicht speicherbare Energie eines Elektroantriebes über die Heizvorrichtung in thermische Energie umwandeln.

### Bezugszeichenliste

- 2: Heizvorrichtung
- 4: Gehäuse
- 4a: Gehäuserahmen
- 4b: Gehäuseboden
- 6: Einlassöffnung
- 8: Auslassöffnung
- 10: Zirkulationskammer
- 12: Trennwand
- 14: Heizkammer
- 16: Ausnehmung
- 18: Heizelement
- 20: keramische Platte
- 22: PTC-Heizelement
- 24: Kontaktblech
- 26: Verlängerungsabschnitt
- 28: Schenkel
- 30: Schenkel
- 32: Druckelement
- 34: Steg
- 35: Isolierplatte
- 36: erste Leiterplatte/Verteilerplatte
- 37: zweite Leiterplatte
- 38: Kontaktaufnahme
- 40: Verlängerungsabschnittaufnahme
- 41: Kontaktzungenelemente
- 42: Plus-Anschlusselement
- 43: Anlagefläche
- 44: Steckkontaktaufnahme
- 45: Minus-Anschlusselement
- 46: Halbleiterschalter
- 47: Isolierschicht
- 48: Gehäuseabdeckung
- 50: Stromanschluss
- 52: Signalanschluss

## Patentansprüche

1. Elektrische Heizvorrichtung umfassend:
ein Gehäuse (4), in welchem eine Trennwand (12) ausgebildet ist, die das Gehäuse (4) in eine Heizkammer (14) und eine ein Medium aufnehmende Zirkulationskammer (10), die von dem Medium durchströmt wird, unterteilt,
eine Einlassöffnung (6) zum Einführen des Mediums in die Zirkulationskammer (10) und eine Auslassöffnung (8) zum Ausführen des erwärmten Mediums aus der Zirkulationskammer (10),
mehreren Heizelementen (18) mit PTC-Heizelementen (22), die zwischen Kontaktblechen (24) mit daran ausgebildeten Verlängerungsabschnitten (26), die in der Heizkammer (14 freiliegen, vorgesehen sind, **gekennzeichnet durch**
eine erste Leiterplatte (36), die auf die : Verlängerungsabschnitte (26) aufgeschobene Kontaktaufnahmen (38) aufweist und auf ihrer den PTC-Heizelementen (22) abgewandten Oberseite von Kontaktzungenelementen (41) überragt ist, und
eine zweite Leiterplatte (37), die Steckkontaktaufnahmen (44) für die Kontaktzungenelemente (41) aufweist,
wobei die zweite Leiterplatte (37) elektrische Schaltelemente (46) trägt und die erste Leiterplatte (36) Leiterbahnen aufweist, **durch** welche einzelne Heizelemente (18) elektrisch gruppiert sind.

2. Elektrische Heizvorrichtung nach Anspruch 1, **dadurch gekennzeichnet, dass** die erste Leiterplatte (36) von einem elektrischen Anschlusselement (32) überragt ist, das eine in der zweiten Leiterplatte (37) ausgesparte Ausnehmung durchragt und von dieser absteht.

3. Elektrische Heizvorrichtung nach Anspruch 1 oder 2, **dadurch gekennzeichnet, dass** die zweite Leiterplatte (37) auf ihrer der ersten Leiterplatte (36) abgewandten Oberseite ein Minus-Anschlusselement (45) trägt.

4. Elektrische Heizvorrichtung nach einem der vorherigen Ansprüche, **dadurch gekennzeichnet, dass** die Vorrichtung ferner eine einen Strom- und Signalanschluss aufweisende Abdeckung (48) umfasst, durch die die Heizkammer (14) abgedichtet ist und welche mit an der Oberseite der zweiten Leiterplatte (37) ausgebildeten Kontaktelementen freiliegende Kontaktgegenelemente trägt.

5. Elektrische Heizvorrichtung nach Anspruch 4, **dadurch gekennzeichnet, dass** die Kontaktelemente und die Kontaktgegenelemente beim Aufsetzen der Abdeckung (48) auf das Gehäuse (4) kontaktierend ineinander einschiebbar sind.

6. Elektrische Heizvorrichtung nach einem der vorherigen Ansprüche, **dadurch gekennzeichnet, dass** die Trennwand (12) eine Vielzahl von Ausnehmungen (16) zum Aufnehmen von elektrischen Heizelementen (18) ausbildet, die in die Zirkulationskammer (10) hineinragen und beidseitig von dem Medium umströmt werden, und dass die Vielzahl von Ausnehmungen in Breitenrichtung des Gehäuses (4) parallel hintereinander ausgebildet sind.

7. Elektrische Heizvorrichtung nach Anspruch 6, **dadurch gekennzeichnet, dass** die Ausnehmungen (16) einen in etwa U-förmigen Querschnitt aufweisen.

8. Elektrische Heizvorrichtung nach Anspruch 6 oder 7, **dadurch gekennzeichnet, dass** die Ausnehmungen (16) gegenüber der Zirkulationskammer (10) abgedichtet sind.

9. Elektrische Heizvorrichtung nach einem der Ansprüche 6 bis 8, **dadurch gekennzeichnet, dass** die Dicke des elektrischen Heizelementes (18) in etwa der Breite der Ausnehmung (16) entspricht.

10. Elektrische Heizvorrichtung nach einem der vorherigen Ansprüche, **dadurch gekennzeichnet, dass** das elektrische Heizelement (16) zwei parallel zueinander angeordnete elektrisch isolierende Platten (20), wobei die Kontaktbieche (24) beidseitig an dem wenigstens einen PTC-Heizelement (22) anliegen und zwischen diesem und den elektrisch isolierenden Platten (20) angeordnet sind.

11. Elektrische Heizvorrichtung nach Anspruch 10, **dadurch gekennzeichnet, dass** die Verlängenrngsabschnitte (26) jeweils diagonal gegenüberliegend vorgesehen sind und das obere Ende der elektrisch isolierenden Platten (20) überragen, wobei die Größe der Fläche der zwischen den isolierenden Platten (20) angeordneten Kontaktbleche (24) jeweils der zu der Innenseite der isolierenden Platte (20) zeigenden Außenfläche des wenigstens einen PTC-Heizelementes (22) entspricht.

12. Elektrische Heizvorrichtung nach Anspruch 11, **dadurch gekennzeichnet, dass** die oberen Enden der jeweiligen Verlängerungsabschnitte (26) der in der Ausnehmung (16) angeordneten elektrischen Heizelemente (18) höhengleich angeordnet sind und im Bereich der Verlängerungsabschnitte (26) wenigstens eine Auflagefläche (42) für die erste Leiterplatte (36) vorgesehen ist.

13. Elektrische Heizvorrichtung nach Anspruch 12, **dadurch gekennzeichnet, dass** die Kontaktaufnahme (38) für die Verlängerungsabschnitte (26) von mehreren in einer Reihe hintereinander angeordneten elektrischen Heizelementen (18) durch einander gegenüberliegende und unter Vorspannung an den Verlängerungsabschnitten (26) anliegende Kontaktbleche gebildet ist.

## Claims

1. Electric heating device (2) comprising:
a housing (4), in which a separating wall (12) is formed that divides the housing (4) into a heating chamber (14) and a circulation chamber (10) that holds a medium and through which the medium flows;
an inlet opening (6) for feeding the medium into the circulation chamber (10) and an outlet opening (8) for guiding the heated medium out of the circulation chamber (10), plural electric heating elements (18) with PTC-heating elements (22), arranged between contact plates (24) having extension sections (26) formed thereto, which are exposed in the heating chamber (14),
**characterized by**
a first printed circuit board (36), which provides contact receptacles (38) slid on the extension sections (26) and which is projected on the upper side, facing away from the PTC heating elements (22) by contact stud elements (41),
and a second printed circuit board (37), which has plug-in contact receptacles (44) for the contact stud elements (41),
wherein the second printed circuit board (37) bears electrical control elements (46) and the first printed circuit board (36) provides conducting paths, by which single heating elements (18) are electrically grouped.

2. Electric heating device according to Claim 1, **characterized in that** the first printed circuit board (36) is projected by an electric contact element (32), which protrudes through a recess cut in the second printed circuit board (37) and projects beyond the same.

3. Electric heating device according to claims 1 or 2, **characterized in that** the second printed circuit board (37) bears a minus-contact element (45) on its upper side facing away from the first printed circuit board (36).

4. Electric heating device according to any of the preceding claims, **characterized in that** the device furthermore comprises a cover (48) having a power and signal terminal, wherein this cover (48) seals the heating chamber (14) and bears contact counter-elements that interact with the contact elements formed on the top side of the second printed circuit board (37).

5. Electric heating device according to Claim 4, **characterized in that** the contact elements and the contact counter-elements can be slid into one another forming a contact when the cover (48) is placed on the housing (4).

6. Electric heating device according to any of the preceding claims, **characterized in that** the separating wall (12) forms a plurality of recesses (16) for holding one of electric heating elements (18) which protrude into the circulation chamber (10) and around which the medium flows on both sides and that the plurality of recesses (16) are formed in parallel with each other and one behind the other in the width direction of the housing (4).

7. Electric heating device according to Claim 6, **characterized in that** the recesses (16) have a roughly U-shaped cross-section.

8. Electric heating device according to claim 6 or 7, **characterized in that** the recesses (16) are sealed off from the circulation chamber (10).

9. Electric heating device according to claims 6 to 8, **characterized in that** the thickness of the electric heating element (18) roughly corresponds to the width of the recess (16).

10. Electric heating device according to any of the preceding claims, **characterized in that** the electric heating element (16) comprises two electrically insulating plates (20) arranged parallel to one another, at least one PTC heating element (22) arranged between these plates (20) and two contact plates (24), which lie against both sides of the at least of one PTC heating element (22) and are arranged between this and the electrically insulating plates (20).

11. Electric heating device according to Claim 10, **characterized in that** the extension sections (26) in each case are provided on diagonally opposing sides and project beyond the upper end of the electrically insulating plates (20), wherein the size of the surface area of the contact plates (24) arranged between the insulating plates (20) corresponds to the outer surface of the at least one PTC heating element (22) facing the interior side of the insulating plate (20) in each case.

12. Electric heating device according to Claim 11, **characterized in that** the upper ends of the respective extension sections (26) are arranged at the same height as the electric heating elements (18) arranged in the recess (16) and, in the area of the extension sections (26), at least one support surface (42) is provided for the first printed circuit board (36).

13. Electric heating device according to Claim 12, **characterized in that** the contact receptacle (38) for the extension sections (26) of a number of electric heating elements (18) arranged in a row, one behind the other, is formed by contact plates that lie opposite one another and that lie on the extension sections (26) with an initial tension.

## Revendications

1. Dispositif de chauffage électrique comprenant :
un boîtier (4) dans lequel est formée une cloison (12) qui divise le boîtier (4) en une chambre de chauffage (14) et une chambre de circulation (10) qui reçoit un fluide et qui est traversée par celui-ci,
une ouverture d'entrée (6) pour l'introduction du fluide dans la chambre de circulation (10), et une ouverture de sortie (8) pour la sortie du fluide chauffé, hors de la chambre de circulation (10),
plusieurs éléments chauffants (18) avec des éléments chauffants CPT (à coefficient positif de température) (22) qui sont prévus entre des zones de contact (24) pourvues de prolongements (26) qui sont dégagés dans la chambre de chauffage (14),
**caractérisé par** :
une première carte imprimée (36) qui présente des éléments de contact (38) enfilés sur les prolongements (26) et d'où dépassent, sur son côté opposé aux éléments chauffants CPT (22), des éléments à languette de contact (41), et
une seconde carte imprimée (37) qui présente des logements de contact à fiches (44) pour les éléments à languette de contact (41),
la seconde carte imprimée (37) portant des éléments de commutation électriques (46) et la première carte imprimée (36) présentant des pistes conductrices grâce auxquelles des éléments chauffants (18) individuels sont groupés électriquement.

2. Dispositif de chauffage électrique selon la revendication 1, **caractérisé en ce qu'**un élément connexion électrique (32) qui traverse un creux ménagé dans la seconde carte imprimée (37) et qui dépasse de celle-ci dépasse de la première carte imprimée (36).

3. Dispositif de chauffage électrique selon la revendication 1 ou 2, **caractérisé en ce que** la seconde carte imprimée (37) porte un élément de connexion négatif (45) sur sa face supérieure opposée à la première carte imprimée (36).

4. Dispositif de chauffage électrique selon l'une des revendications précédentes, **caractérisé en ce qu'**il comprend également un couvercle (48) qui présente une alimentation en courant et en signaux, qui réalise l'étanchéité de la chambre de chauffage (14) et qui porte avec des éléments de contact formés sur la face supérieure de la seconde carte imprimée (37) des éléments de contact opposés dégagés.

5. Dispositif de chauffage électrique selon la revendication 4, **caractérisé en ce que** les éléments de contact et les éléments de contact opposés, quand on pose le couvercle (48) sur le boîtier (4), sont aptes à être glissés les uns dans les autres en établissant un contact.

6. Dispositif de chauffage électrique selon l'une des revendications précédentes, **caractérisé en ce que** la cloison (12) forme plusieurs creux (16) pour recevoir des éléments chauffants électriques (18) qui dépassent dans la chambre de circulation (10) et autour desquels le fluide passe, des deux côtés, et **en ce que** les creux sont formés parallèlement les uns derrière les autres dans le sens de la largeur du boîtier (4).

7. Dispositif de chauffage électrique selon l'une des revendication 6, **caractérisé en ce que** les creux (16) présentent une section transversale globalement en U.

8. Dispositif de chauffage électrique selon la revendication 6 ou 7, **caractérisé en ce que** les creux (16) sont étanches par rapport à la chambre de circulation (10).

9. Dispositif de chauffage électrique selon l'une des revendications 6 à 8, **caractérisé en ce que** l'épaisseur de l'élément chauffant électrique (18) correspond à peu près à la largeur du creux (16).

10. Dispositif de chauffage électrique selon l'une des revendications précédentes, **caractérisé en ce que** l'élément chauffant électrique (16) comprend deux plaques isolantes électriquement (20) qui sont disposées parallèlement, les tôles de contact (24) étant appliquées des deux côtés contre le ou les éléments chauffants CPT (22) et étant disposées entre celui/ceux-ci et les plaques isolantes électriquement (20).

11. Dispositif de chauffage électrique selon la revendication 10, **caractérisé en ce que** les prolongements (26) sont prévus en diagonale à l'opposé l'un de l'autre et dépassent de l'extrémité supérieure des plaques isolantes électriquement (20), la taille de la surface des tôles de contact (24) disposées entre les plaques isolantes (20) correspondant à la surface extérieure du ou des éléments chauffants CPT (22) dirigée vers le côté intérieur de la plaque isolante (20).

12. Dispositif de chauffage électrique selon la revendication 11, **caractérisé en ce que** les extrémités supérieures des prolongements (26) des éléments chauffants électriques (18) disposés dans le creux (16) sont disposées à la même hauteur, et il est prévu dans la zone des prolongements (26) au moins une surface d'appui (42) pour la première carte imprimée (36).

13. Dispositif de chauffage électrique selon la revendication 12, **caractérisé en ce que** le logement de contact (38) pour les prolongements (26) de plusieurs éléments chauffants électriques (18) alignés les uns derrière les autres est formé par des tôles de contact opposées et appliquées avec une contrainte préliminaire au niveau des prolongements (26).
